Europäisches Patentamt

European Patent Office

Office européen des brevets

(19)

(11) Veröffentlichungsnummer: **0 228 372**
**B1**

(12) **EUROPÄISCHE PATENTSCHRIFT**

(45) Veröffentlichungstag der Patentschrift: **09.05.90**

(21) Anmeldenummer: **85904094.1**

(22) Anmeldetag: **16.08.85**

(86) Internationale Anmeldenummer:
**PCT/DE85/00277**

(87) Internationale Veröffentlichungsnummer:
**WO 86/01527 13.03.86 Gazette 86/06**

(51) Int. Cl.⁵: **C 09 D 11/10**

(54) **SCHNELL WEGSCHLAGENDE DRUCKFARBEN UND DEREN VERWENDUNG.**

(30) Priorität: **01.09.84 DE 3432234**

(43) Veröffentlichungstag der Anmeldung:
**15.07.87 Patentblatt 87/29**

(45) Bekanntmachung des Hinweises auf die
Patenterteilung:
**09.05.90 Patentblatt 90/19**

(84) Benannte Vertragsstaaten:
**AT BE CH DE FR GB IT LI NL SE**

(56) Entgegenhaltungen:
**EP-A-0 042 515**
**FR-A-2 168 173**

**World Surface Coatings Abstracts, Band 56, Nr. 490 , April 1983 (Old Woking, Surrey, GB), siehe Seite 340, Zusammenfassung Nr. 83/2176, & SU, A, 891733 (Moscow Geodesy Aerial)**

**Die Akte enthält technische Angaben, die nach dem Eingang der Anmeldung eingereicht wurden und die nicht in dieser Patentschrift enthalten sind.**

(73) Patentinhaber: **BASF Lacke + Farben Aktiengesellschaft**
**Max-Winkelmann-Strasse 80**
**D-4400 Münster (DE)**

(72) Erfinder: **FRIES, Werner**
**Normannenstrasse 1**
**D-7252 Weil der Stadt (DE)**
Erfinder: **KLEMM, Karl-Wilhelm**
**Ahornstrasse 12**
**D-7000 Stuttgart 70 (DE)**
Erfinder: **DOBBELSTEIN, Arnold**
**Emil-Nolde-Weg 95**
**D-4400 Münster (DE)**
Erfinder: **SOBITZKAT, Horst**
**Schmüllingstrasse 20**
**D-4400 Münster (DE)**

(74) Vertreter: **Welzel, Gunther, Dr. et al**
**BASF Aktiengesellschaft Patentabteilung ZNP - C 6 Carl-Bosch-Strasse 38**
**D-6700 Ludwigshafen (DE)**

**EP  0 228 372  B1**

(56) Entgegenhaltungen:
World Surface Coatings Abstracts, Band 56, Nr.
490 , April 1983 (Old Woking, Surrey, GB), siehe
Seite 340, Zusammenfassung Nr. 83/2176, &
SU, A, 891733 (Moscow Geodesy Aerial)

## Beschreibung

Die Erfindung betrifft Druckfarben für den Bogenoffsetdruck und Buchdruck, die als Bindemittel (A) phenolharzmodifiziertes Kolophonium in einem Anteil von 60 bis 90 Gew.-% und ein Alkydharz (B) in einem Anteil von 10 bis 40 Gew.-% enthalten, wobei die Summe von phenolharzmodifiziertem Kolophonium und Alkydharz 100 Gew.-% ergibt. Das Alkydharz ist hergestellt worden aus

a) einer ungesättigten Fettsäure mit 6 bis 20 C-Atomen oder einem Gemisch derartiger Säuren oder deren Triglyceride,

b) einem Polyol und

c) einer Dicarbonsäure.

Die Druckfarben enthalten weiterhin Mineralöl, Pigmente und gegebenenfalls weitere übliche Druckfarbenbestandteile, wie Gleitmittel, Lösungsmittel, Verdickungsmittel und Thixotropierungsmittel.

Aus der DE—PS 30 23 118 sind Papier-Druckfarben dieser Art für graphische Zwecke bekannt. Diese bestehen aus Pigmenten, einem mit langkettigen Fettsäuren mit der Jodzahl kleiner als 20* modifizierten Alkydharz-Bindemittel, welches eine Säurezahl von vorzugsweise 6 bis 12 und eine Hydroxylzahl von vorzugsweise größer als 15, insbesondere 20 bis 35 aufweist, und gegebenenfalls weiteren üblichen Bestandteilen, wie Gleitmittel, Lösungsmittel und einem viskositätsbeeinflussenden Mittel.

Je nach Anwendungsbereich werden an Druckfarben eine Vielzahl von Anforderungen gestellt. Druckfarben sollen z.B. eine hohe Scheuerfestigkeit und in vielen Fällen eine gute Wiederablösbarkeit besitzen. Weiterhin sollen sie möglichst vergilbungsfrei, geruchsneutral und schnell trocknend sein. Zur Herstellung der Druckfarbe werden zunächst die verschiedenen Harze bei erhöhter Temperatur in Mineralöl gelöst, daran anschließend werden die Pigmente eingebracht. Druckfarben der oben geschilderten Zusammensetzung härten anschließend oxidativ aus.

Bei Verwendung der in der DE—PS 30 23 118 beschriebenen wie auch anderer Druckfarben für das Bogenoffset- und das Buchdruckverfahren tritt das Problem des Ablegens auf, d.h. mit Mineralöl gut verträgliche Druckfarben geben dieses nur langsam ab, folglich bleiben die Drucke feucht und erfordern daher eine Puderbestäubung. Der Bestäubungspuder dient als Abstandshalter für die feuchten Drucke im Stapel und ermöglicht ferner einen besseren Zutritt von Sauerstoff für die oxidative Trocknung. Die Puderbestäubung wirkt sich jedoch auf die Qualität der Drucke und die spätere Weiterverarbeitung nachteilig aus.

Die Nachteile der Puderbestäubung bestehen in der schlechten Scheurfestigkeit der Drucke, in Komplikationen bei nachfolgenden Prozessen, wie Lackierung und Cellophanieren sowie in der Verschmutzung der Maschine.

Eine Übersicht über die Nachteile der Puderbestäubung im Offsetdruck gibt W. Walenski in "Der Polygraph", Bd 5, 1984, S. 435—36. Aus dieser Übersicht ist ersichtlich, wie dringend der Wunsch nach einer schnell wegschlagenden Druckfarbe ist.

Aus der FR—A 2 168 173 sind Siebdruckfarben bekannt, die spezielle Polymethylspirocyclosiloxane und Standard-Alkydharze mit OH-Zahlen von ca. 20—60 enthalten. Bei den mit Lösungsmitteln wie Toluol, Cyclohexan und Ethylacetat verarbeiteten Siebdruckfarben liegt ein anderes Trocknungsverhalten vor, und es stellt sich nicht die Aufgabe des schnellen Wegschlagens wie bei Druckfarben für den Bogenstoffsetdruck und den Buchdruck.

Der Erfindung liegt die Aufgabe zugrunde, diese Nachteile des Standes der Technik zu vermeiden und eine Druckfarbe für den Bogenoffsetdruck und Buchdruck anzugeben, die schnell wegschlägt un daher ohne Bestäubungspuder auskommt.

Überraschenderweise wurde gefunden, daß diese Aufgabe gelöst wird durch eine Druckfarbe, die als Bindemittel ein Alkydharz mit hoher Hydroxylzahl, niedriger Säurezahl und hoher Jodzahl der Fettsäuren in Kombination mit einem phenolharzmodifizierten Kolophonium enthält. Gegenstand der Erfindung ist daher eine Druckfarbe der eingangs genannten Art, die dadurch gekennzeichnet ist, daß die ungesättigten Fettsäuren eine Jodzahl von 120 bis 280 ($gI_2$/100 g), bevorzugt 120—200 ($gI_2$/100 g), besonders bevorzugt 120—190 ($gI_2$/100 g), haben und das Alkydharz eine Säurezahl unter 11 und eine Hydroxylzahl von mindestens 110 und nicht über 260 (mg KOH/g Harz) aufweist.

Im Gegensatz zur DE—PS 30 23 118 werden zur Modifizierung des Alkydharzes sogenannte schnelltrocknende Öle bzw. Fettsäuren, die sich durch eine hohe Jodzahl auszeichnen, eingesetzt. Die oxidative Trocknung über die Doppelbindungen der stark ungesättigten Fettsäuren bzw. Öle ist für die chemische Trocknung der Druckfarbe verantwortlich. Die gute chemische Trocknung wird durch die physikalische Trocknung der Druckfarbe, die sich durch das Wegschlagverhalten bestimmen läßt, ergänzt. Eine gute physikalische Trocknung wird durch die erfindungsgemäße Druckfarbe erreicht. Die als Bindemittel verwendeten Alkydharze haben Hydroxylzahlen, die im Bereich von 110 bis 260 liegen. Diese im Vergleich zur DE—PS 30 23 118 hohen Hydroxylzahlen führen zu einer gesteigerten Polarität der Alkydharzbindemittel. Diese polaren Alkydharze haben nur eine begrenzte Löslichkeit in Mineralölen, was dazu führt, daß Druckfarben, die polare Alkydharze und Mineralöl enthalten, gut wegschlagen. Hydroxyl-

*bestimmt nach DIN 53241

zahlen von mindestens 110 sind notwendig, um die für rasches Wegschlagen notwendige Polarität zu erlangen; als besonders vorteilhaft für das Wegschlagverhalten kann der OH-Zahl-Bereich von 110 bis 180 angegeben werden. Wird eine OH-Zahl des Alkydharzes von 260 überschritten, löst sich das polare Alkydharz kaum noch in dem für Druckfärben üblichen Lösungsmittel Mineralöl.

Als ungesättigte Fettsäuren oder Öle haben sich Lackleinöl, Sojaöl oder dehydratisiertes Rizinusöl und die aus diesen gewonnenen Fettsäuren bewährt. Als Polyolkomponenten sind Trimethylolpropan, Glyzerin und/oder Pentaerythrit besonders gut geeignet. Bevorzugte Dicarbonsäuren sind Pthalsäure, Isophthalsäure, Adipinsäure oder Tetrahydrophthalsäure, wobei in der Praxis gegebenenfalls deren Anhydride eingesetzt werden.

Die Erfindung betrifft auch ein Verfahren zur Herstellung einer Druckfarbe.

Zunächst wird aus

a) einer ungesättigten Fettsäure mit 6 bis 20 C-Atomen oder einem Gemisch derartiger Säuren oder deren Triglyceride

b) einem Polyol und

c) einer Dicarbonsäure

ein fettsäuremodifiziertes Alkydharz hergestellt. Dieses wird mit phenolharzmodifiziertem Kolophonium und einem Mineralöl zu einer Bindemittelmischung verarbeitet, wobei der Anteil an Alkydharz bei 10 bis 40 Gew.-% und der des modifizierten Kolophoniums bei 60 bis 90 Gew.-%, bezogen auf das Gesamtgewicht von Alkydharz und Kolophonium, liegt. Diese Bindemittelmischung wird zusammen mit Pigmenten, gegebenenfalls weiteren Bindemitteln und weiteren üblichen Druckfarbenbestandteilen, wie Gleitmittel, Verdickungsmittel und Thixotropierungsmittel, mittels einer Dispergiervorrichtung, wie z.B. einer Dreiwalze, einer Sand- oder Kugelmühle, dispergiert. Kennzeichnend ist hierbei, daß die ungesättigten Fettsäuren eine Jodzahl von 120 bis 280 (gI$_2$/100 g), bevorzugt 120 bis 200 (gI$_2$/100 g), besonders bevorzugt 120 bis 190 (gI$_2$/100 g), und die Alkydharze eine Hydroxylzahl von mindestens 110 und nicht über 260 und eine Säurezahl unter 11 haben. Zur modifizierung der Alkydharze können vorteilhaft Lackleinöl, Sojaöl oder dehydratisiertes Rizinusöl bzw. die aus diesen gewonnenen Fettsäuren verwendet werden. Als Polyolkomponente eignen sich Trimethylolpropan, Glycerin und/oder Pentaerythrit, als Dicarbonsäurekomponente kommen Phthalsäure, Isophthalsäure, Adipinsäure oder Tetrahydrophthalsäure oder gegebenenfalls deren Anhydride in Frage.

Die erfindungsgemäßigen Druckfarben können für das Bogenoffset-Druckverfahren verwendet werden, bei dem der Druck zunächst auf ein Gummituch und von dort auf das Papier oder einen anderen Bedruckstoff abgesetzt wird. Beim Bogenoffset-Druckverfahren werden geschnittene Bogen bedruckt.

Überraschenderweise eignet sich die erfindungsgemäße Druckfarbe auch für die Verwendung im Buchdruckverfahren.

Da die erfindungsgemäßen Druckfarben, abgesehen von der oxidativen Trocknung, auch physikalisch gut trocknen, also schnell wegschlagen, kann auf die sonst erforderliche Puderbestäubung verzichtet werden, Dies ist von großem Vorteil, da der Bestäubungspuder die Qualität der Drucke mindert und die spätere Weiterverarbeitung erschwert.

Als neu und vorteilhaft kann hinsichtlich der erfindungsgemäßen Druckfarben die Kombination der guten chemischen und physikalischen Trocknung durch geeignete Jod- und Hydroxylzahlen angesehen werden. Messungen des Wegschlagverhaltens zeigen, daß die erfindungsgemäßen Druckfarben deutlich schneller wegschlagen als bekannte entsprechende Druckfarben mit Standard-Alkydharzen mit OH-Zahlen von ca. 10—60 (mg KOH/g).

Im folgenden wird die Erfindung an Hand von Ausführungsbeispielen näher beschrieben.

Beispiel 1

Es werden 1508 Gewichtsteile Leinölfettsäure, 523 Gewichtsteile Pentaerythrit und 479 Gewichtsteile Isophthalsäure in einem Reaktor unter schwachem Schutzgasstrom auf 250°C erhitzt. Man hält bei dieser Temperatur, bis der Sud in der Hitze klar ist, Dann läßt man die Temperatur auf 210°C fallen und hält bei dieser Temperatur, bis die Säurezahl unter 9 erreicht ist und die Viskosität zwischen 60—70 dPa · s (80 %ig in Butyldiglykol) liegt. Die OH-Zahl des Harzes liegt bei 111. Das erhaltene Harz wird in einem Mineralöl mit einem Siedebereich von 280 bis 310°C gelöst, so daß eine 70 %ige Lösung entsteht.

Unter Verwendung dieser Harzlösung wird ein Druckfarben-Bindemittel nach folgender Zusammensetzung hergestellt:

| | |
|---|---|
| phenolharzmodifiziertes Kolophonium | 300 Gewichtsteile |
| Alkydharz (70 %ig in Mineralöl) | 250 Gewichtsteile |
| Mineralöl (Siedebereich 280—310°C) | 450 Gewichtsteile |
| | 1000 Gewichtsteile |

Die Harze werden in Mineralöl bei 220°C unter Rühren gelöst. Mit diesem Bindemittel wird mittels einer Dreiwalze eine Druckfarbe folgender Zusammensetzung hergestellt:

| | |
|---|---|
| Blaupigment | 15 Gewichtsteile |
| Substrate (anorganische Füllstoffe, wie z.B. CaCO₃, Al₂O₃) | 3 Gewichtsteile |
| Wachs | 1 Gewichtsteil |
| Bindemittel | 72 Gewichtsteile |
| Mineralöl | 7 Gewichtsteile |
| Trockenstoff | 2 Gewichtsteile |
| | 100 Gewichtsteile |

**Beispiel 2**

Es werden 1073 Gewichtsteile Lackleinöl in einem Reaktor unter schwachem Schutzgasstrom auf 200°C erhitzt. Dann gibt man 418 Gewichtsteile Pentaerythrit und 2 Gewichtsteile Lithiumstearat zu und heizt auf 260°C. Bei dieser Temperatur wird umgeestert. Anschließend kühlt man auf 210°C und setzt 534 Gewichtsteile Isophthalsäure zu. Es wird danach wieder auf 240°C geheizt und bei dieser Temperatur gehalten, bis der Sud in der Hitze klar ist. Dann läßt man auf 200°C fallen und hält bei dieser Temperatur, bis die Säurezahl unter 11 erreicht ist und die Viskosität zwischen 300—400 dPas · s (80 %ig in Butyldiglykol) liegt. Die OH-Zahl des Harzes liegt bei 181. Das erhaltene Harz wird in einem Mineralöl mit einem Siedebereich von 280 bis 310°C gelöst, so daß eine 60 %ige Lösung entsteht.

Unter Verwendung dieser Harzlösung wird ein Druckfarben-Bindemittel nach folgender Zusammensetzung hergestellt:

| | |
|---|---|
| phenolharzmodifiziertes Kolophonium | 300 Gewichtsteile |
| Akydharz (60 %ig in Mineralöl) | 250 Gewichtsteile |
| Mineralöl (Siedebereich 280—310°C) | 450 Gewichtsteile |
| | 1000 Gewichtsteile |

Die Harze werden im Mineralöl bei 220° unter Rühren gelöst. Mit diesem Bindemittel wird mittels einer Dreiwalze eine Druckfarbe folgender Zusammensetzung hergestellt:

| | |
|---|---|
| Blaupigment | 15 Gewichtsteile |
| Substrate (anorganische Füllstoffe) | 3 Gewichtsteile |
| Wachs | 1 Gewichtsteil |
| Bindemittel | 70 Gewichtsteile |
| Mineralöl | 9 Gewichtsteile |
| Trockenstoff | 2 Gewichtsteile |
| | 100 Gewichtsteile |

**Vergleichsbeispiel**

Zu Vergleichszwecken wird Druckfarbe aus dem Beispiel 1 der DE—PS 30 23 118 dargestellt. Das modifizierte Alkydharz wird aus 1800 g Kokosöl, 569 g Trimethylolpropan und 797 g Isophthalsäure unter den dort angegebenen Bedingungen unter Zugabe von 0,1 g Bleiglätte und 7 g p-Toluolsulfonsäure als Vernetzungskatalysator hergestellt und mit 600 g Mineralöl (Siedebereich 250—280°C) verdünnt. Anschließend werden, wie im Beispiel beschrieben, 10 g des Alkydharzes mit 10 g eines Pigmentes, 2 g eines Polyethylenwachses und 76 g einer Bindemittellösung aus 32 g eines phenolharzmodifizierten Kolophoniumharzes in 44 g Mineralöl (Siedebereich 270—310°C) angerieben.

Das Wegschlagverhalten der in den Beispielen 1 und 2 dargestellten Druckfarben wird mit dem Wegschlagverhalten der Druckfarbe aus dem Vergleichsbeispiel auf Basis Isophthalsäure, Kokosöl und Trimethylolpropan verglichen.

Das Wegschlagverhalten wird gemessen, indem in Abhängigkeit von der Zeit die Farbmenge, die von dem bedruckten Stoff auf einen Konterbedruckstoff übertragen wird, densitometrisch bestimmt wird. Hierbei zeigt sich, daß bei der im Vergleichsbeispiel beschriebenen Druckfarbe nach 15 Sekunden die optische Farbdichte auf dem Konterbedruckstoff 8—10 mal höher ist als die optische Farbdichte, die beim Vermessen der Druckfarben aus den Beispielen 1 und 2 erhalten wird. Das bedeutet, daß diese bedeutend schneller wegschlagen.

Erst nach etwa 60 Sekunden sind die optischen Farbdichten von vergleichbarer Große.

**Patentansprüche**

1. Druckfarbe für den Bogenoffsetdruck und Buchdruck, enthaltend ein Bindemittel aus

(A) 60 bis 90 Gew.-% eines phenolharzmodifizierten Kolophoniums und

(B) 10 bis 40 Gew.-% eines Alkydharzes hergestellt aus

(a) einer Fettsäure mit 6 bis 20 C-Atomen oder einem Gemisch solcher Säuren oder Triglyceriden davon,

(b) einem Polyol und

(c) einer Dicarbonsäure

wobei sich die Prozentzahlen auf die Summe der Mengen von (A) und (B) beziehen, sowie Mineralöl, Pigmente und ggf. weitere übliche Druckfarbenbestandteile, dadurch gekennzeichnet, daß die Fettsäuren (a) für die Herstellung des Alkydharzes (B), ungesättigte Fettsäuren mit einer Jodzahl von 120 bis 280 (gI$_2$/ 100 g) sind und das Alkydharz (B) eine Hydroxylzahl von mindestens 110 und nicht über 260 sowie eine Säurezahl von unter 11 aufweist.

2. Druckfarbe nach Anspruch 1, dadurch gekennzeichnet, daß die Hydroxylzahl des Alkydharzes (B) 110 bis 180 beträgt.

3. Druckfarbe nach Anspruch 1 oder 2, dadurch gekennzeichnet, daß die ungesättigten Fettsäuren (a) für das Alkydharz (B) eine Jodzahl von 120 bis 190 (gI$_2$/100 g) aufweisen.

4. Druckfarbe nach einem der Ansprüche 1 bis 3, dadurch gekennzeichnet, daß als Fettsäurekomponenten (a) für das Alkydharz (B) Lackleinöl, Sojaöl, dehydratisiertes Rizinusöl oder daraus gewonnene Fettsäuren verwendet werden.

5. Druckfarbe nach einem der Ansprüche 1 bis 4, dadurch gekennzeichnet, daß als Polyole (b) für das Alkydharz (B) Trimethylolpropan, Glycerin und/oder Pentaerythrit verwendet werden.

6. Druckfarbe nach einem der Ansprüche 1 bis 5, dadurch gekennzeichnet, daß als Dicarbonsäure (c) für das Alkydharz (B) Phthalsäure, Isophthalsäure, Adipinsäure, Tetrahydrophthalsäure oder Anhydride davon verwendet werden.

7. Verfahren zur Herstellung einer Druckfarbe nach einem der Ansprüche 1 bis 6, dadurch gekennzeichnet, daß zunächst das Alkydharz (B) hergestellt und dieses mit dem phenolharzmodifizierten Kolophonium (A) und einem Mineralöl zu einem Druckfarbenbindemittel verarbeitet wird, in dem Pigmente und ggf. weitere übliche Druckfarbenbestandteile mittels einer Dispergiervorrichtung dispergiert werden.

8. Verwendung der Druckfarben nach einem der Ansprüche 1 bis 6 für den Bogenoffsetdruck, wobei auf eine Puderbestäubung der Druckerzeugnisse verzichtet wird.

**Revendications**

1. Encre d'imprimerie pour l'impression offset de feuilles et l'impression typographique, contenant un liant composé

(A) de 60 à 90% en poids d'une colophane modifiée par une résine phénolique et

(B) de 10 à 40% en poids d'une résine alkyde préparée à partir

(a) d'un acide gras contenant 6 à 20 atomes de carbone ou d'un mélange d'acides de ce genre ou de triglycérides de ceux-ci,

(b) d'un polyol et

(c) d'un acide dicarboxylique,

les pourcentages se rapportant à la somme des quantités de (A) et (B), ainsi que d'une huile minérale, de pigments et éventuellement d'autres constituants usuels d'encre d'imprimerie, caractérisée en ce que les acides gras (a) pour la préparation de la résine alkyde (B) sont des acides gras insaturés ayant un indice d'iode de 120 à 280 (g de I$_2$/100 g) et en ce que la résine alkyde (B) présente un indice d'hydroxyle d'au moins 110, mais ne dépassant pas 260, ainsi qu'un indice d'acide de moins de 11.

2. Encre d'imprimerie selon la revendication 1, caractérisée en ce que l'indice d'hydroxyle de la résine alkyde (B) se situe entre 110 et 180.

3. Encre d'imprimerie selon la revendication 1 ou 2, caractérisée en ce que les acides gras insaturés (a) pour la résine alkyde (B) présentent un indice d'iode de 120 à 190 (g de I$_2$/100 g).

4. Encre d'imprimerie selon l'une quelconque des revendications 1 à 3, caractérisée en ce qu'on utilise, comme composants acide gras (a) pour la résine alkyde (B), de l'huile de lin raffinée, de l'huile de soja, de l'huile de ricin déshydratée ou des acides gras obtenus à partir de ces huiles.

5. Encre d'imprimerie selon l'une quelconque des revendications 1 à 4, caractérisée en ce qu'on utilise, comme polyols (b) pour la résine alkyde (B), du triméthylolpropane, de la glycérine et/ou de la pentaérythrite.

6. Encre d'imprimerie selon l'une quelconque des revendications 1 à 5, caractérisée en ce qu'on utilise, comme acide dicarboxylique (c) pour la résine alkyde (B), de l'acide phtalique, de l'acide isophthalique, de l'acide adipique, de l'acide tétrahydrophtalique ou des anhydrides de ces acides.

7. Procédé de préparation d'une encre d'imprimerie selon l'une quelconque des revendications 1 à 6, caractérisé en ce qu'on commence par préparer la résine alkyde (B) et on travaille celle-ci avec la colophane modifiée par une résine phénolique (A) et avec une huile minérale pour obtenir un liant d'encre d'imprimerie dans lequel des pigments et éventuellement d'autres constituant usuels d'encre d'imprimerie sont mis en dispersion au moyen d'un dispositif disperseur.

8. Utilisation des encres d'imprimerie selon l'une quelconque des revendications 1 à 6 pour l'impression offset de feuilles, permettant de se passer du saupoudrage des produits imprimés.

**Claims**

1. A printing ink for sheet-fed offset printing and letterpress printing, containing a binder formed from

(A) 60—90% by weight of a phenolic-modified rosin and

(B) 10—40% by weight of an alkyd resin prepared from

(a a fatty acid of from 6 to 20 carbon atoms or a mixture of such acids or triglycerides thereof,

(b) a polyol and

(c) a dicarboxylic acid,

the percentages being based on the total of the amounts of (A) and (B), and also a mineral oil, a pigment and the usual other, optional printing ink ingredients, wherein the fatty acid (a) for preparing the alkyd resin (B) is an unsaturated fatty acid having an iodine number of from 120 to 280 (g of $I_2$/100 g) and the alkyd resin (B) has a hydroxyl number of not less than 110 and not above 260 and also an acid number of below 11.

2. A printing ink as claimed in claim 1, wherein the hydroxyl number of the alkyd resin (B) is 110—180.

3. A printing ink as claimed in claim 1 or 2, wherein the unsaturated fatty acid (a) for the alkyd resin (B) has an iodine number from 120 to 190 (g of $I_2$/100 g).

4. A printing ink as claimed in any one of claims 1 to 3, wherein the fatty acid component (a) for the alkyd resin (B) is refined linseed oil, soybean oil, dehydrated castor oil or a fatty acid isolated therefrom.

5. A printing ink as claimed in any one of claims 1 to 4, wherein the polyol (b) for the alkyd resin (B) is trimethylolpropane, glycerol or pentaerythritol.

6. A printing ink as claimed in any one of claims 1 to 5, wherein the dicarboxylic acid (c) for the alkyd resin (B) is phthalic acid, isophthalic acid, adipic acid, tetrahydrophthalic acid or an anhydride thereof.

7. A process for preparing a printing ink as claimed in any one of claims 1 to 6, which comprises first preparing the alkyd resin (B) and processing it together with the phenolic-modified rosin (A) and a mineral oil to form a printing ink binder in which the pigment and the usual other, optional printing ink ingredients, are dispersed by means of a dispersing apparatus.

8. The use of a printing ink as claimed in any one of claims 1 to 6 for sheet-fed offset printing without the prints used to dust with a powder.